# EUROPEAN PATENT SPECIFICATION

(11) **EP 4 474 259 B1**
(45) Date of publication and mention of the grant of the patent: **25.02.2026**
(21) Application number: 24178749.8
(22) Date of filing: 29.05.2024
(51) Int. Cl.: B62J 43/10, B62J 43/13, B62J 43/20

(54) **EASY LOADING AND UNLOADING STRUCTURE, BATTERY MOUNTING FRAME, VEHICLE FRAME ASSEMBLY, AND ELECTRIC VEHICLE**
EINFACHE BE- UND ENTLADUNGSSTRUKTUR, BATTERIE-MONTAGERAHMEN, FAHRZEUGRAHMENBAUGRUPPE UND ELEKTROFAHRZEUG
STRUCTURE DE CHARGEMENT ET DE DÉCHARGEMENT FACILE, CADRE DE MONTAGE DE BATTERIE, ENSEMBLE CHÂSSIS DE VÉHICULE ET VÉHICULE ÉLECTRIQUE

(30) Priority: 02.06.2023 CN 202310654463
(43) Date of publication of application: 11.12.2024
(73) Proprietor: Guang Dong Greenway Technology Co., Ltd, Dongguan, Guangdong 523000 (CN)
(72) Inventor: Liu, Jinshun, Guangdong (CN); Ye, Guohua, Guangdong (CN); Zhang, Zhiping, Guangdong (CN)
(74) Representative: Chung, Hoi Kan

(56) References cited:
- CN-U- 213 735 350
- CN-U- 218 287 972
- CN-Y- 2 571 651
- TW-A- 202 315 781
- US-A- 5 251 777
- US-A1- 2022 324 530

## Description

### TECHNICAL FIELD

The present disclosure relates to the technical field of electric vehicles, in particular to an easy loading and unloading structure, a battery mounting frame, a vehicle frame assembly and an electric vehicle.

### BACKGROUND

With development of new energy and continuous promotion for the concept of environmentally-friendly commuting, more and more people chose electric bicycles, which are two-wheeled vehicles taking a battery as the main power source or an auxiliary power source, for transportation trip. However, the frame of the two-wheeled vehicle is built by connecting tubular products, and a space for unloading and loading the battery is very limited. Therefore, it needs to consider the convenience for unloading and loading the battery.

At present, most external power batteries available on the market are loaded and unloaded in a direct plugging-in and releasing manner, in such a way that the moving direction is substantially in the same plane as the vehicle frame. When the battery is installed at the rear of the vehicle frame, it is relatively easy to unload and load the battery. When the battery is installed in the middle of the vehicle frame, the space for unloading and loading the battery is limited by the upper, lower, left and right tubes of the vehicle frame. In order to reliably mount the battery at the middle of the vehicle frame and ensure easy unloading and loading, a known battery mounting frame is, for example, a rotatable self-locking structure for easy unloading and loading of a battery proposed by CN 202222571600.6. In this structure, a fixing base is connected to a rotatable base through an equal-height screw so that the rotatable base is rotatable relative to the fixing base, and a rotation angle is limited through a limiting hole and a limiting post. A battery holder is connected to the rotatable base, and the fixing base is connected to a vehicle tube. In this way, the battery holder is enabled to be rotated relative to the vehicle tube, which in turn enables the battery to be installed in the middle of the vehicle frame and ensures the easy unloading and loading.

However, in the existing battery mounting frame, there is shaking when the rotatable base is rotated relative to the fixing base; that is, there is poor reliability for the rotation of the rotatable base relative to the fixing base; thus, there is poor service reliability of the existing battery mounting frame. The document TW 202 315 781 A discloses a loading and unloading structure.

### SUMMARY

The present disclosure aims to overcome the defects in the related art, and provides an easy loading and unloading structure, a battery mounting frame, a frame assembly and an electric vehicle, by which the shaking caused during the rotation of the rotatable base relative to the fixing base can be avoided, and good service reliability is enabled.

The purposes of the present disclosure is achieved by the technical solutions as follows.

An easy loading and unloading structure is proposed, which includes:
a fixing bracket, provided with a first positioning hole and a second positioning hole;
a rotatable bracket rotatably connected to the fixing bracket, where a rotation sliding groove is provided in the rotatable bracket;
an elastic positioning post connected to a side of the rotatable bracket facing the fixing bracket, where the elastic positioning post is arranged to elastically engage with and abut against the first positioning hole or the second positioning hole; and
an auxiliary limiting member connected to the fixing bracket, where the auxiliary limiting member extends into the rotation sliding groove, and a side of the rotatable bracket away from the fixing bracket is configured to be restrained by the auxiliary limiting member when the rotatable bracket is rotated relative to the fixing bracket; wherein the auxiliary limiting member includes a rotation guiding post and a mounting member. The rotation guiding post protrudes from a side of the fixing bracket close to the rotatable bracket and extends into the rotation sliding groove, and there is relative sliding between the rotation guiding post and the rotation sliding groove when the rotatable bracket is rotated. The mounting member is connected to the rotation guiding post. The side of the rotatable bracket away from the fixing bracket is configured to be restrained by the mounting member when the rotatable bracket is rotated relative to the fixing bracket; and wherein the mounting member is detachably connected to the rotation guiding post.

In some embodiments, there are two auxiliary limiting members and two rotation sliding grooves, and each of the two auxiliary limiting members is arranged in a corresponding one of the two rotation sliding grooves.

In some embodiments, the easy loading and unloading structure further includes a locking member. The fixing bracket is provided with a first connecting hole, the rotatable bracket is provided with a second connecting hole located between the two rotation sliding grooves, and the second connecting hole is aligned and communicated with the first connecting hole. The locking member passes through both the first connecting hole and the second connecting hole in such a manner that the rotatable bracket is rotatably connected with the fixing bracket.

In some embodiments, the rotation guiding post is provided with a fixing hole, and the mounting member is located in the fixing hole and in thread connection with the rotation guiding post.

In some embodiments, a diameter of an end of the mounting member away from the fixing bracket is greater than a width of the rotation sliding groove.

In some embodiments, there is a preloading deformation gap between the fixing bracket and the rotatable bracket.

In some embodiments, a side of the fixing bracket close to the rotatable bracket is provided with a first supporting protrusion and a second supporting protrusion. The first supporting protrusion is arranged around the first connecting hole, and the second supporting protrusion is arranged around both the first positioning hole and the second positioning hole. The preloading deformation gap is defined between the fixing bracket, the rotatable bracket, the first supporting protrusion and the second supporting protrusion. When the rotatable bracket is rotatably connected to the fixing bracket, the rotatable bracket is arranged to deform toward the preloading deformation gap.

A battery mounting frame is proposed, which includes a battery holder and the easy loading and unloading structure of any of the embodiments mentioned above. The battery holder is mounted on the rotatable bracket, the battery holder is configured to be detachably sleeve on a battery, and the fixing bracket is configured to be connected onto a vehicle frame.

A vehicle frame assembly is proposed, which includes a battery, a vehicle frame and a battery mounting frame. The vehicle frame is provided with a mounting portion, the fixing bracket is connected onto the mounting portion, and the battery holder is detachably sleeved on the battery.

An electric vehicle is proposed, which includes the vehicle frame assembly mentioned above.

Different from the related art, the present disclosure brings about advantages at least as follow.
1. In the easy loading and unloading structure mentioned above, the battery holder may be mounted on the rotatable bracket, and the fixing bracket may be fixed onto the vehicle frame. Since the rotatable bracket is rotatably connected to the fixing bracket, the rotatable bracket can be rotated to a predetermined angle relative to the fixing bracket; as such, when there is a need to unload and load the battery, the user can quickly unload the battery from the battery holder or load the battery into the battery holder. Thus, the battery can be quickly unloaded and loaded, especially for a vehicle frame having a relatively narrow space.
2. In the easy loading and unloading structure mentioned above, during the process that the rotatable bracket is rotated relative to the fixing bracket, the elastic positioning post is arrange to elastically engage with and engage against the first positioning hole or the second positioning hole, so that the rotatable bracket can be correspondingly positioned at two different positions relative to the fixing bracket, thereby satisfying a positioning requirement for unloading and loading as well as holding the battery. For example, when the elastic positioning post is elastically engaged with and abuts against the first positioning hole, the rotatable bracket is rotated to a first predetermined position relative to the fixing bracket, in this case, the battery can be unloaded and loaded. When the elastic positioning post is elastically engaged with and abuts against the second positioning hole, the rotatable bracket is rotated to a second predetermined position relative to the fixing bracket, in this case, the battery is reliably received on the vehicle frame with the easy loading and unloading structure.
3. When the rotatable bracket is rotated relative to the fixing bracket, the elastic positioning post is arranged to elastically engage with and engage against the first positioning hole or the second positioning hole, so that the elastic positioning post can play a limiting and supporting role at positions where the rotatable bracket is rotated to relative to the fixing bracket. In addition, the auxiliary limiting member is connected to the fixing bracket and extends into the rotation sliding groove; and when the rotatable bracket is rotated relative to the fixing bracket, a side of the rotatable bracket away from the fixing bracket is configured to be restrained by the auxiliary limiting member; as such, it prohibits the rotatable bracket from shaking towards a side away from the fixing bracket during the process that the rotatable bracket is rotated relative to the fixing bracket. This eliminates the shaking caused during the rotation of the rotatable base relative to the fixing base in the existing battery mounting frame, improves the reliability of the rotation of the rotatable base relative to the fixing base, and improves the service reliability of the easy loading and unloading structure.

### BRIEF DESCRIPTION OF THE DRAWINGS

In order to clearly explain technical solutions of embodiments of the present disclosure, drawings used in the embodiments will be briefly described below. It is understandable that the drawings as described below illustrate merely some embodiments of the present disclosure, and therefore should not be regarded as limiting the scope. Based on these drawings, other drawings can be obtained by those skilled in the art without inventive effort.
FIG. 1 is a schematic diagram illustrating a state of a vehicle frame assembly according to an embodiment.
FIG. 2 is a schematic diagram illustrating another state of the vehicle frame assembly of FIG. 1.
FIG. 3 is an exploded view of the vehicle frame assembly illustrated in FIG. 1.
FIG. 4 is a cross-sectional view illustrating a battery mounting frame of the vehicle frame assembly illustrated in FIG.1.
FIG. 5 is a partial enlarged view of the battery mounting frame illustrated in FIG. 4.
FIG. 6 is a schematic diagram illustrating an easy loading and unloading structure of the battery mounting frame of the vehicle frame assembly illustrated in FIG. 1 from another perspective.
FIG. 7 is a cross-sectional view illustrating the easy loading and unloading structure taken from A-A in FIG. 6.
FIG. 8 is an exploded view of a partial structure of the easy loading and unloading structure illustrated in FIG. 7.
FIG. 9 is a schematic diagram illustrating a battery holder of the battery mounting frame illustrated in FIG. 4 from a perspective.
FIG. 10 is a schematic diagram illustrating the battery holder illustrated in FIG. 9 from another perspective.

### DETAILED DESCRIPTION OF PREFERRED EMBODIMENTS

For ease of understanding of the present disclosure, the present disclosure will be comprehensively described with reference to the accompanying drawings. Preferred embodiments of the present disclosure are presented in the accompanying drawings. However, the present disclosure may be implemented in many different forms and is not limited to the embodiments described herein. Rather, the purpose of providing these embodiments is to enable thorough and comprehensive understanding of the contents of the present disclosure.

It is notable that, when an element is described as being "fixed to" another element, it may be directly on the another element or there may be an intermediate element. When an element is considered to be "connected" to another element, it may be directly connected to another element or there may be an intermediate element. Terms "vertical," "horizontal," "left," "right," and the like as used herein are for illustrative purposes only and are not meant to be the only implementation.

Unless otherwise defined, all technical and scientific terms used herein have the same meaning as commonly understood by those skilled in the art of the present disclosure. The terminologies used herein in the specification of the present disclosure are for the purpose of describing specific embodiments only, and are not intended to limit the present disclosure. The term "and/or" as used herein includes any and all combinations of one or more related listed items.

The present disclosure provides an easy loading and unloading structure. The easy loading and unloading structure includes a fixing bracket, a rotatable bracket, an elastic positioning post, and an auxiliary limiting member. The fixing bracket is provided with a first positioning hole and a second positioning hole. The rotatable bracket is rotatably connected to the fixing bracket, and a rotation sliding groove is provided in the rotatable bracket. The elastic positioning post is connected to a side of the rotatable bracket facing the fixing bracket, and is arranged to elastically engage with and engage against the first positioning hole or the second positioning hole. The auxiliary limiting member is connected to the fixing bracket and extends into the rotation sliding groove. During a process that the rotatable bracket is rotated relative to the fixing bracket, a side of the rotatable bracket away from the fixing bracket is configured to be restrained by the auxiliary limiting member.

In the easy loading and unloading structure, the battery holder may be mounted on the rotatable bracket, and the fixing bracket may be fixed onto the vehicle frame. Since the rotatable bracket is rotatably connected to the fixing bracket, the rotatable bracket can be rotated to a predetermined angle relative to the fixing bracket; as such, when there is a need to unload and load the battery, the user can quickly unload the battery from the battery holder or load the battery into the battery holder. Thus, the battery is enabled to be quickly unloaded and loaded, especially for a vehicle frame having a relatively narrow space. In the easy loading and unloading structure mentioned above, during the process that the rotatable bracket is rotated relative to the fixing bracket, the elastic positioning post is arranged to elastically engage with and engage against the first positioning hole or the second positioning hole, so that the rotatable bracket can be correspondingly positioned at two different positions relative to the fixing bracket, thereby satisfying a positioning requirement for unloading and loading as well as holding the battery. For example, when the elastic positioning post is elastically engaged with and abuts against the first positioning hole, the rotatable bracket is rotated to a first predetermined position relative to the fixing bracket, in this case, the battery can be unloaded and loaded. When the elastic positioning post is elastically engaged with and abuts against the second positioning hole, the rotatable bracket is rotated to a second predetermined position relative to the fixing bracket, in this case, the battery is reliably received on the vehicle frame with the easy loading and unloading structure. When the rotatable bracket is rotated relative to the fixing bracket, the elastic positioning post is arranged to elastically engage with and engage against the first positioning hole or the second positioning hole, so that the elastic positioning post can play a limiting and supporting role at positions where the rotatable bracket is rotated to relative to the fixing bracket. In addition, the auxiliary limiting member is connected to the fixing bracket and extends into the rotation sliding groove; and when the rotatable bracket is rotated relative to the fixing bracket, a side of the rotatable bracket away from the fixing bracket is configured to be restrained by the auxiliary limiting member; as such, it avoids the rotatable bracket from shaking towards a side away from the fixing bracket during the process that the rotatable bracket is rotated relative to the fixing bracket. This avoids the shaking caused during the rotation of the rotatable base relative to the fixing base in the existing battery mounting frame, improves the reliability of the rotation of the rotatable base relative to the fixing base, and improves the service reliability of the easy loading and unloading structure.

In order to better understand technical solutions and beneficial effects of the disclosure, the present disclosure will be further described in detail below with reference to specific implementations.

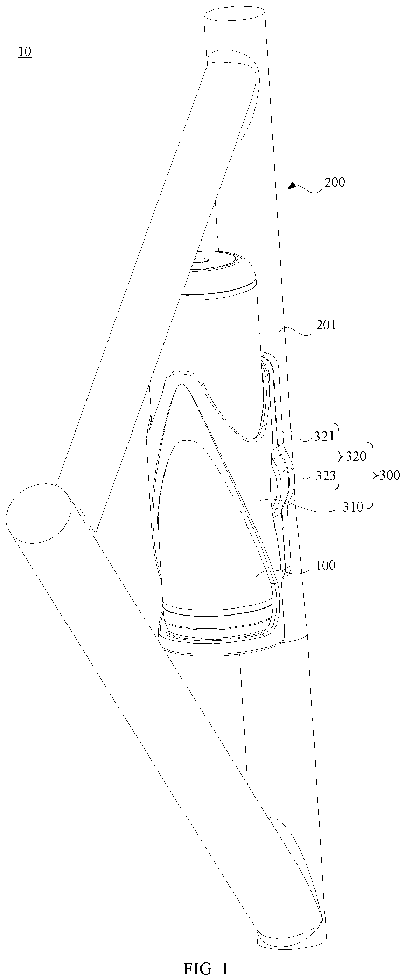

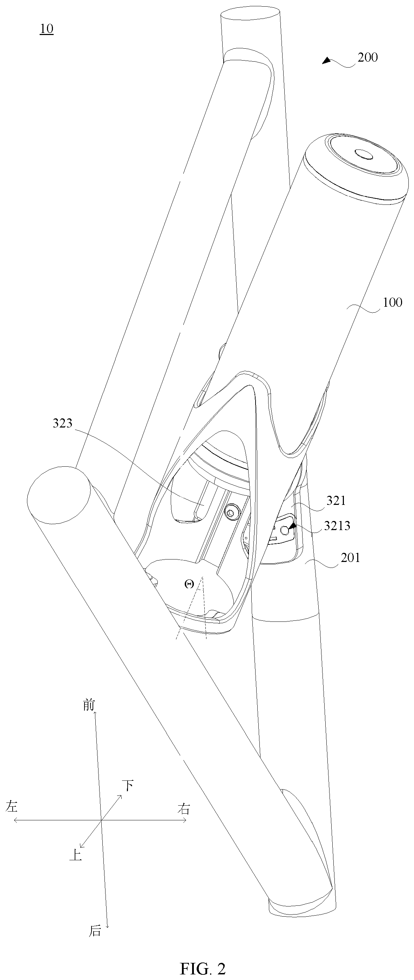

As illustrated in FIG. 1 and FIG. 2, a vehicle frame assembly 10 is provided in an embodiment of the present disclosure, which may be used in an electric vehicle or other electric devices. The electric vehicle may be an electric two-wheeled vehicle or an electric tricycle or an electric four-wheeled vehicle. In the embodiments, the electric two-wheeled vehicle may be an electric bicycle or an electric motorcycle.

As illustrated in FIG. 1 and FIG. 2, in some embodiments, the vehicle frame assembly 10 includes a battery 100, a vehicle frame 200 and a battery mounting frame 300. The vehicle frame 200 is provided with a mounting portion 201, and the battery mounting frame 300 is fixedly mounted to the mounting portion 201. The vehicle frame 200 may be a triangular frame 200 or a V-shaped frame 200 or other frames 200.

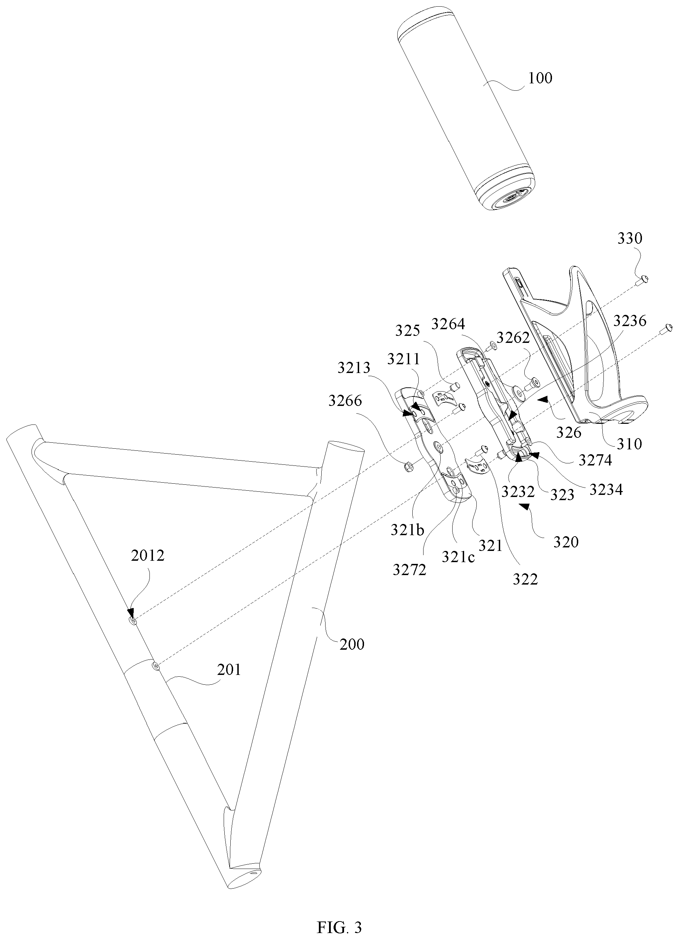

As illustrated in FIG. 3 to FIG. 7, in some embodiments, the battery mounting frame 300 includes a battery holder 310 and an easy loading and unloading structure 320, and the battery holder 310 is mounted on the easy loading and unloading structure 320. The easy loading and unloading structure 320 includes a fixing bracket 321, a rotatable bracket 323, an elastic positioning post 325, and an auxiliary limiting member 327. The fixing bracket 321 is configured to be connected to the vehicle frame 200. Specifically, the fixing bracket 321 is connected to the mounting portion 201. The fixing bracket 321 is provided thereon with a first positioning hole 3211 and a second positioning hole 3213, and each of the first positioning hole and the second positioning hole may be a blind hole or a recess. The rotatable bracket 323 is rotatably connected to the fixing bracket 321, and a rotation sliding groove 3232 is provided in the rotatable bracket 323. In the embodiments, the battery holder 310 is mounted on the rotatable bracket 323, and the battery holder 310 is detachably sleeved on the battery 100 (that is, the battery 100 is detachably received in the battery bolder 310). This connects the battery 100 to the rotatable bracket 323 through the battery holder 310, enables the battery 100 to be unloaded from and loaded onto the battery holder 310, and improves the use convenience of the battery mounting frame 300. Further, the battery holder 310 is in a structure formed by over-molding, so that the battery 100 can be quickly removed from or placed into the battery holder 310.

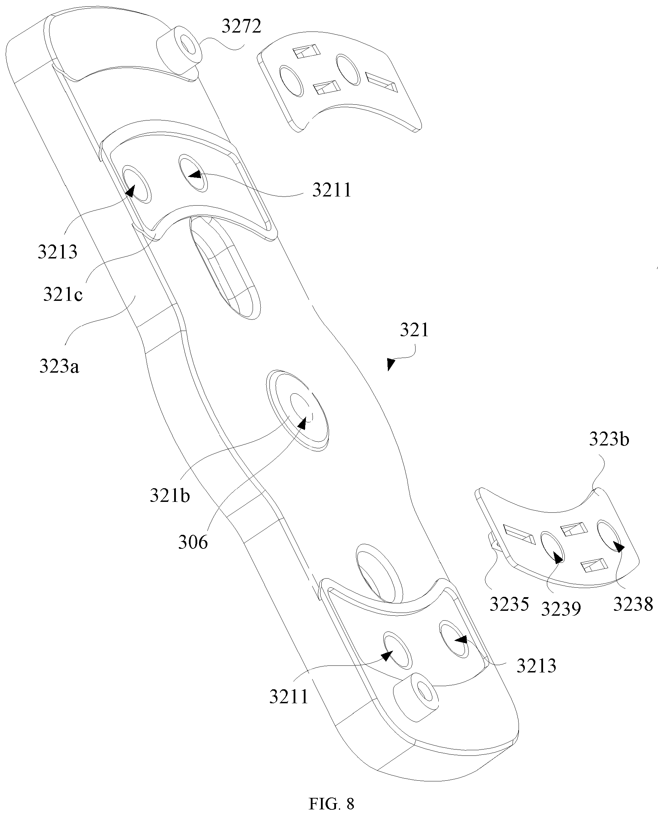

As illustrated in FIG. 1, FIG. 2, FIG. 7 and FIG. 8, in some embodiments, the elastic positioning post 325 is connected to a side of the rotatable bracket 323 facing the fixing bracket 321, and the elastic positioning post 325 is capable of being elastically engaged with and abutting against the first positioning hole 3211 or the second positioning hole 3213. As illustrated in FIG. 2 and FIG. 8, when the elastic positioning post 325 is elastically engaged with and abuts against the first positioning hole 3211, the rotatable bracket 323 is rotated to a first predetermined position relative to the fixing bracket 321; in this case, it is rotated to be in an open state, that is, the rotatable bracket 323 is at a predetermined angle relative to the fixing bracket 321, and the battery 100 can be then unloaded and loaded, especially for a vehicle frame 200 having a narrow space. As such, a space required for unloading and loading the battery can be offered by rotating the rotatable bracket out. As illustrated in FIG. 1 and FIG. 8, when the elastic positioning post 325 is elastically engaged with and abuts against the second positioning hole 3213, the rotatable bracket 323 is rotated to a second predetermined position relative to the fixing bracket 321; in this case, it is in a closed state in which the rotatable bracket 323 is substantially parallel to the fixing bracket 321, and the battery 100 is reliably received in the vehicle frame 200 with the easy loading and unloading structure 320.

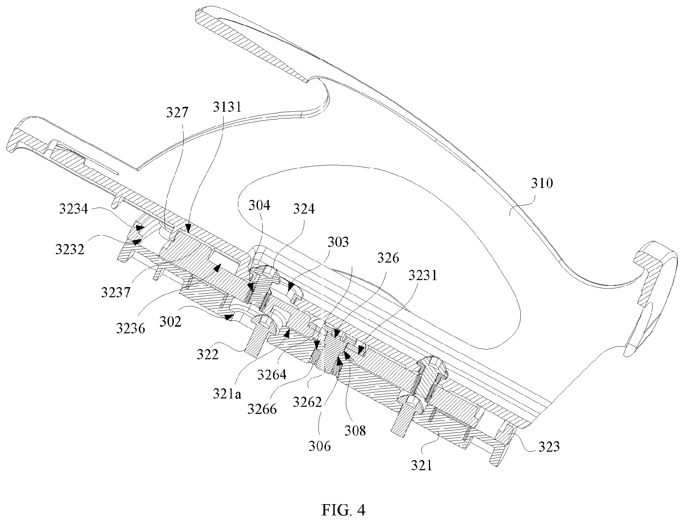

As illustrated in FIG. 4, in some embodiments, the auxiliary limiting member 327 is connected to the fixing bracket 321 and extends into the rotation sliding groove 3232, and relative sliding happens between the auxiliary limiting member 327 and the rotation sliding groove 3232 when the rotatable bracket 323 is rotated. When the rotatable bracket 323 is rotated relative to the fixing bracket 321, a side of the rotatable bracket 323 away from the fixing bracket 321 is configured to be restrained by the auxiliary limiting member 327, so that the rotatable bracket 323 is prevented, during the process that the rotatable bracket 323 is rotated relative to the fixing bracket 321, from shaking in a direction perpendicular to a plane where the rotatable bracket 323 is rotated. In addition, the relative sliding between the auxiliary limiting member 327 and the rotation sliding groove 3232 that exists when the rotatable bracket 323 is rotated relative to the fixing bracket 321, improves the smoothness and reliability of the rotation of the rotatable bracket 323 relative to the fixing bracket 321.

With the easy loading and unloading structure 320, the battery mounting frame 300 and the vehicle frame assembly 10 mentioned above, the battery holder 310 may be mounted on the rotatable bracket 323, and the fixing bracket 321 may be fixed on the vehicle frame 200. Since the rotatable bracket 323 is rotatably connected to the fixing bracket 321, the rotatable bracket 323 can be rotated to a predetermined angle relative to the fixing bracket 321; as such, when there is a need to unload and load the battery 100, the user can quickly unload the battery 100 from the battery holder 310 or load the battery 100 onto the battery holder 310. Thus, the battery 100 is enabled to be quickly unloaded and loaded, especially for a vehicle frame 200 having a relatively narrow space. In the easy loading and unloading structure 320, during the process that the rotatable bracket 323 is rotated relative to the fixing bracket 321, the elastic positioning post 325 is arranged to elastically engage with and abut against the first positioning hole 3211 or the second positioning hole 3213, so that the rotatable bracket 323 can be correspondingly positioned at two different positions relative to the fixing bracket 321, thereby satisfying a positioning requirement for unloading and loading as well as holding the battery 100. Through the rotation of the rotatable bracket 323 relative to the fixing bracket 321, the elastic positioning post 325 is arranged to elastically engage with and abut against the first positioning hole 3211 or the second positioning hole 3213, so that the elastic positioning post 325 can play a limiting and supporting role at positions where the rotatable bracket 323 is rotated to relative to the fixing bracket 321. In addition, the auxiliary limiting member 327 is connected to the fixing bracket 321 and extends into the rotation sliding groove 3232, and when the rotatable bracket 323 is rotated relative to the fixing bracket 321, a side of the rotatable bracket 323 away from the fixing bracket 321 is configured to be restrained by the auxiliary limiting member 327; as such, it avoids the rotatable bracket 323 from shaking towards a side away from the fixing bracket 321 during the process that the rotatable bracket 323 is rotated relative to the fixing bracket 321. This avoids the shaking caused during the rotation of the rotatable base relative to the fixing base in the existing battery mounting frame 300, that is, this avoids the rotatable bracket 323 from shaking up and down relative to the fixing bracket 321 during the process that the rotatable bracket 323 is rotated relative to the fixing bracket 321. Thus, the reliability of the rotation of the rotatable base relative to the fixing base is improved, and the service reliability of the easy loading and unloading structure 320 is improved.

As illustrated in FIG. 3 to FIG. 5, further, the fixing bracket 321 is provided with a first mounting hole 302, and the mounting portion 201 is provided with a first threaded hole 2012. The easy loading and unloading structure 320 further includes a first screw rod 322, and the first screw rod 322 passes through both the first mounting hole 302 and the first threaded hole 2012. In addition, the first screw rod 322 is in thread connection with the vehicle frame 200, so that the fixing bracket 321 is reliably mounted on the vehicle frame 200.

As illustrate in FIG. 3 to FIG. 6, in some embodiments, there are two auxiliary limiting members 327 and two rotation sliding grooves 3232, and each of the two auxiliary limiting members 327 is arranged in a corresponding one of the two rotation sliding grooves 3232. A second connecting hole 308 is provided between the two rotation sliding grooves 3232. This better facilitates the relative sliding between the auxiliary limiting member 327 and the rotation sliding groove 3232 when the rotatable bracket 323 is rotated relative to the fixing bracket 321, better avoids the rotatable bracket 323 from shaking up and down relative to the fixing bracket 321 during the process that the rotatable bracket 323 is rotated relative to the fixing bracket 321, and further improves the stability and reliability of the rotation of the rotatable bracket 323 relative to the fixing bracket 321. Similarly, as illustrated in FIG. 8, there are two first positioning holes 3211 and two second positioning holes 3213; and at each of two opposite ends of the fixing bracket 321, a pair of the first positioning holes 3211 and the second positioning holes 3213 is defined.

As illustrated in FIG. 3 to FIG. 6, in some embodiments, the easy loading and unloading structure 320 further includes a locking member 326. The fixing bracket 321 is provided with a first connecting hole 306, the rotatable bracket 323 is provided with the second connecting hole 308, and the second connecting hole 308 is aligned and communicated with the first connecting hole 306. The locking member 326 passes through both the first connecting hole 306 and the second connecting hole 308, which enables the rotatable bracket 323 to be rotatably connected to the fixing bracket 321. In the embodiments, the locking member 326 is a screw assembly or a bolt assembly.

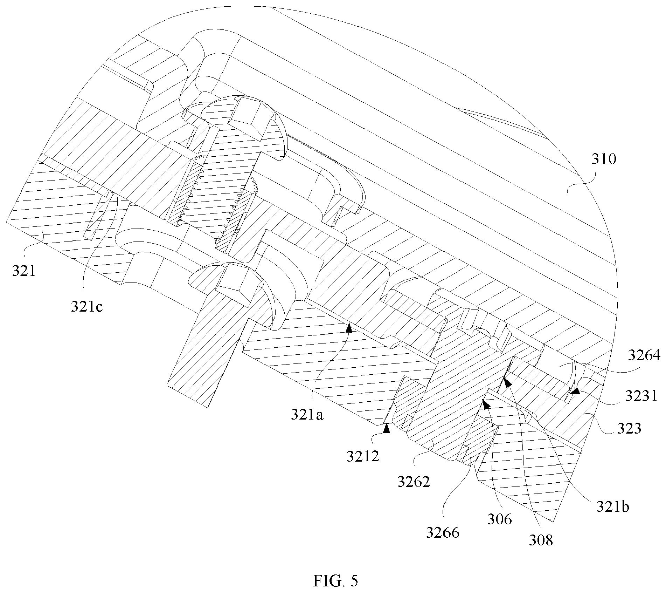

As illustrated in FIG. 3 to FIG. 6, further, the locking member 326 includes a locking screw 3262, a locking washer 3264 and a nut 3266. The locking screw 3262 passes through both the first connecting hole 306 and the second connecting hole 308, and a head of the locking screw 3262 abuts, through the locking washer 3264, against a side of the rotatable bracket 323 away from the fixing bracket 321. The nut 3266 is sleeved on a rod portion of the locking screw 3262, and is screwed with the locking screw 3262. The nut 3266 is confined at a side of the fixing bracket 321 away from the rotatable bracket 323. This avoids the locking screw 3262 from being driven to rotate during the process that the rotatable bracket 323 is rotated relative to the fixing bracket 321, that is, this avoids the nut 3266 from being easily dropped from the locking screw 3262 during the process that the rotatable bracket 323 is rotated relative to the fixing bracket 321, thereby ensuring that the rotatable bracket 323 is rotatably connected with the fixing bracket 321 reliably. As illustrated in FIG. 4 and FIG. 5, further, the rotatable bracket 323 is provided with a first positioning groove 3231 communicated with the second connecting hole 308. The locking washer 3264 is located in and abuts against the first positioning groove 3231, so that the locking washer 3264 is better confined at the rotatable bracket 323. Furthermore, the fixing bracket 321 is provided with a second positioning groove 3212 communicated with the first connecting hole 306. The nut 3266 is located in the second positioning groove 3212 and is connected with the fixing bracket 321, which enables the nut 3266 to be better confined at the fixing bracket 321.

As illustrated in FIG. 3 to FIG. 6, in some embodiments, a preloading deformation gap 321a is provided between the fixing bracket 321 and the rotatable bracket 323. When the rotatable bracket 323 is rotationally fixed on the fixing bracket 321 by means of the locking member 326, the rotatable bracket 323 may deform towards the preloading deformation gap 321a, thereby further avoiding the shaking of the rotatable bracket 323 relative to the fixing bracket 321, especially in the process that the rotatable bracket 323 is rotated relative to the fixing bracket 321. In the embodiments, the preloading deformation gap 321a is staggered from a position where the locking member 326 is fixed to the rotatable bracket 323, and the preloading deformation gap 321a is provided on two sides of the locking member 326. Specifically, there are two auxiliary limiting members 327, and the two auxiliary limiting members 327 are provided on two sides of the locking member 326. The preloading deformation gap 321a is provided between the fixing bracket 321 and the rotatable bracket 323, and the preloading deformation gap 321a is also located in a region between the locking member 326 and each auxiliary limiting member 327. As such, after the rotatable bracket 323 is assembled onto the fixing bracket 321, the rotatable bracket 323 is enabled to better deform towards the preloading deformation gap 321a, thereby better preventing the rotatable bracket 323 from shaking up and down relative to the fixing bracket 321.

As illustrated in FIG. 4 and FIG. 5, in some embodiments, a side of the fixing bracket 321 close to the rotatable bracket 323 is provided with a first supporting protrusion 321b and a second supporting protrusion 321c. The first supporting protrusion 321b is arranged around the first connecting hole 306, and the second supporting protrusion 321c is arranged around both the first positioning hole 3211 and the second positioning hole 3213. The preloading deformation gap 321a is defined among the fixing bracket 321, the rotatable bracket 323, the first supporting protrusion 321b and the second supporting protrusion 321c, which reduces the difficulty of manufacturing the preloading deformation gap 321a, and simplifies the structure of the easy loading and unloading structure 320. In the embodiments, when the rotatable bracket 323 is rotatably connected to the fixing bracket 321, the rotatable bracket 323 deforms towards the preloading deformation gap 321a.

As illustrated in FIG. 2, FIG. 3 and FIG. 8, further, the fixing bracket 321 includes a bracket body 323a and a wear-resistant member 323b. Each of the first supporting protrusion 321b and the second supporting protrusion 321c protrudes from the bracket body 323a. The second supporting protrusion 321c surrounds the wear-resistant member 323b, that is, the wear-resistant member 323b is embedded in the second supporting protrusion, so that the wear-resistant member 323b is better fixedly connected to the second supporting protrusion 321c, and the fixing bracket 321 is more compact in structure. Each of a second mounting hole 303 and the second connecting hole 308 is provided in ratable bracket 323, the first connecting hole 306 is provided in the bracket body 323a, and each of the first positioning hole 3211 and the second positioning hole 3213 is provided in the bracket body 323a. The wear-resistant member 323b is provided with a first through hole 3238 and a second through hole 3239, the first through hole is correspondingly communicated with the first positioning hole 3211, and the second through hole is correspondingly communicated with the second positioning hole 3213. It enables the fixing bracket 321 to be light in weight and low in manufacturing cost, and enables each of the first positioning hole 3211 and the second positioning hole 3213 to have better wear resistance. In the embodiments, the wear member 323b is a metal piece. Furthermore, the wear-resistant member 323b is provided with a convex rib 3235 protruding therefrom, and the convex rib is embraced by the second supporting protrusion 321c.

As illustrated in FIG. 2, FIG. 3 and FIG. 6, further, the rotation sliding groove 3232 is a waist-shaped groove, which better facilitates the relative sliding between the auxiliary limiting member 327 and the rotation sliding groove 3232 when the rotatable bracket 323 is rotated relative to the fixing bracket 321.

As illustrated in FIG. 2, FIG. 3 and FIG. 7, further, when the rotatable bracket 323 is rotated to a predetermined angle relative to the fixing bracket 321, the elastic positioning post 325 is elastically engaged with and abuts against the first positioning hole 3211, and then the easy loading and unloading structure 320 is the open state through rotation. In this case, the battery 100 may be unloaded and loaded without being affected by the space of the vehicle frame, especially for a vehicle frame 200 having a narrow space. In the embodiments, the predetermined angle is 10° to 65°. In the embodiments, the predetermined angle is 30°.

As illustrated in FIG. 2, FIG. 3 and FIG. 6, in some embodiments, the auxiliary limiting member 327 includes a rotation guiding post 3272 and a mounting member 3274. The rotation guiding post 3272 protrudes from the side of the fixing bracket 321 close to the rotatable bracket 323, and the rotation guiding post 3272 extends into the rotation sliding groove 3232, and the rotation sliding groove 3232 is movable relative to the rotation guiding post 3272. The mounting member 3274 is connected to the rotation guiding post 3272, and when the rotatable bracket 323 is rotated relative to the fixing bracket 321, the side of the rotatable bracket 323 away from the fixing bracket 321 is configured to be restrained by the mounting member 3274. As such, the auxiliary limiting member 327 is enabled to reliably guide the rotation of the rotatable bracket 323 relative to the fixing bracket 321, and the auxiliary limiting member 327 can prevent the rotatable bracket 323 from shaking during the process that the rotatable bracket 323 is rotated relative to the fixing bracket 321.

As illustrated in FIG.2, FIG. 3 and FIG. 6, in some embodiments, the mounting member 3274 is detachably connected to the rotation guiding post 3272. In the embodiments, the rotation guiding post 3272 is provided with a fixing hole, and the mounting member 3274 is located in the fixing hole and is in thread connection with the rotation guiding post 3272, which enables the mounting member 3274 to be detachably connected to the rotation guiding post 3272. It may be understood that, in other embodiments, the mounting member 3274 is not limited to being in thread connected with the rotation guiding post 3272. For example, the mounting member 3274 is snap fitted with the rotation guiding post 3272. Certainly, in other embodiments, the mounting member 3274 is not only limited to being detachably connected to the rotation guiding post 3272. For example, the mounting member 3274 is riveted or welded to the rotation guiding post 3272.

As illustrated in FIG. 2, FIG. 3 and FIG. 6, further, the mounting member 3274 is a screw or a self-tapping screw. In the embodiments, the mounting member 3274 is a self-tapping screw, which enables the mounting member 3274 to better limit the rotatable bracket 323.

As illustrated in FIG. 2, FIG. 4 and FIG. 6, further, the rotatable bracket 323 is further provided with an anti-shaking limiting groove 3234 communicated with the rotation sliding groove 3232. An end of the mounting member 3274 facing away from the fixing bracket 321 is located in the anti-shaking limiting groove 3234, and there is a gap between the end of the mounting member 3274 facing away from the fixing bracket 321 and a bottom of the anti-shaking limiting groove 3234, which enables smooth sliding along the limiting groove and the rotation sliding groove when the rotatable bracket 323 is rotated relative to the fixing bracket 321.

As illustrated in FIG. 3, FIG. 4 and FIG. 8, in some embodiments, the diameter of the end of the mounting member 3274 facing away from the fixing bracket 321 is greater than the width of the rotation sliding groove 3232; as such, when the rotatable bracket 323 is rotated relative to the fixing bracket 321, the end of the mounting member 3274 facing away from the fixing bracket 321 can reliably prevent the rotatable bracket 323 from shaking.

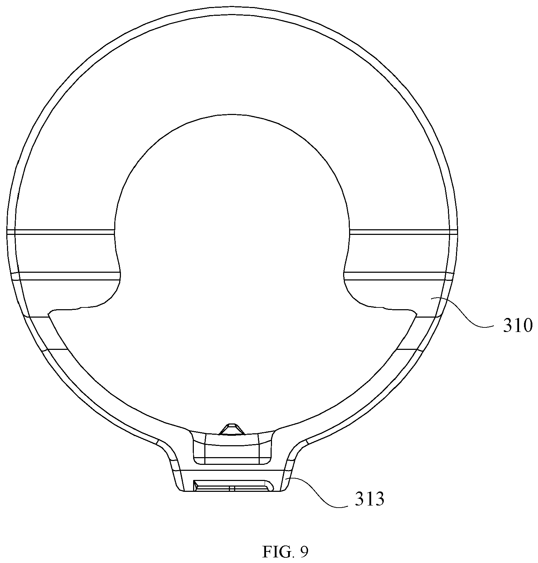

As illustrated in FIG. 4, FIG. 6 and FIG. 9, in some embodiments, an outer wall of the battery holder 310 close to the rotatable bracket 323 is provided thereon with a limiting flange 313. The rotatable bracket 323 is provided with a limiting groove 3236, that is, the rotatable bracket 323 is provided with a grooved skeleton structure. The limiting flange 313 is located in the limiting groove 3236, that is, the limiting flange 313 is received in the limiting groove 3236. Since the limiting flange 313 is located in the limiting groove 3236, the battery holder 310 can be better in deformation fit after being fastened to the rotatable bracket 323 by means of a fixing member 330, and the battery holder 310 can be prevented from shaking relative to the rotatable bracket 323. The battery holder 310 can be better fixed on the rotatable bracket 323.

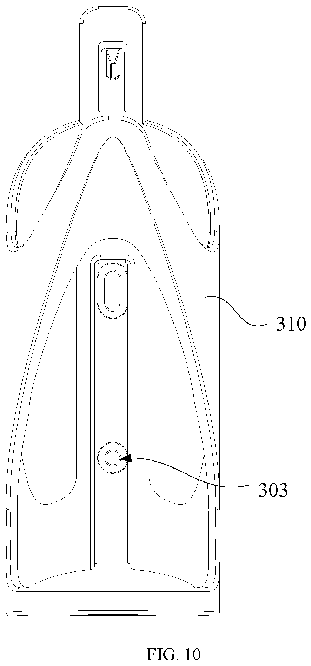

As illustrated in FIG. 4, FIG. 5, FIG. 9 and FIG. 10, further, the battery holder 310 is provided with a second mounting hole 303, and the rotatable bracket 323 is provided with a second screw hole 304. The easy loading and unloading structure 320 further includes a second screw rod 324. The second screw rod 324 passes through each of the second mounting hole 303 and the second screw hole 304, and the second screw rod 324 is screwed with the rotatable bracket 323. This enables the battery holder 310 to reliably be mounted on the rotatable bracket 323. In the embodiments, the second screw rod 324 is a screw fastener or a nut bolt, and the fixing hole is a threaded hole. Specifically, the second screw rod 324 is a machine hexagon screw.

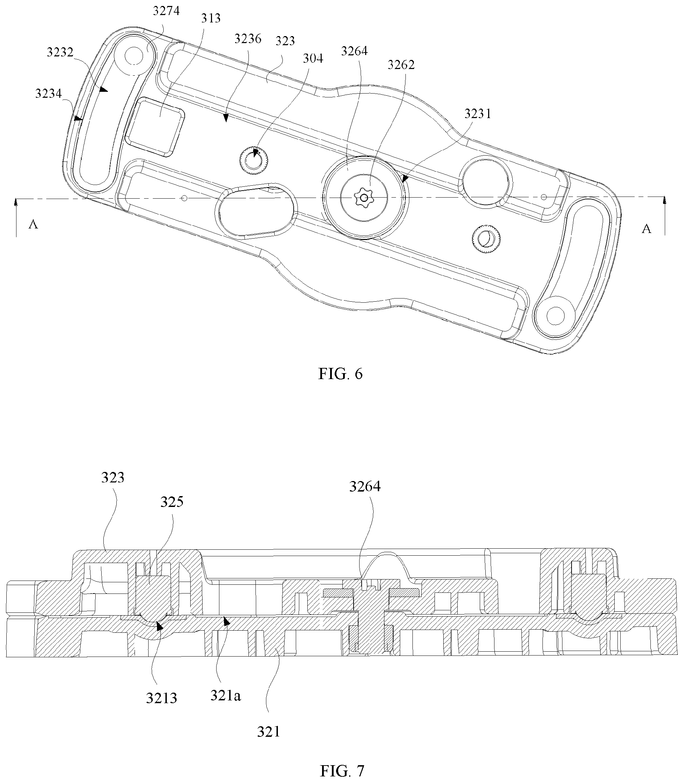

As illustrated in FIG. 4 and FIG. 6, in some embodiments, a limiting boss 3237 is provided in the limiting groove 3236, the limiting flange 313 is provided with a fixing limiting groove 3131, and the limiting boss 3237 is located in the fixing limiting groove 3131 and connected with the battery holder 310. As such, the battery holder 310 is better prevented from shaking relative to the rotatable bracket 323, and the battery holder 310 can be better fixedly connected with the rotatable bracket 323. In the embodiments, the limiting boss 3237 is skeleton-shaped, which enables the limiting boss 3237 to have a good supporting strength, avoids large deformation caused when the battery holder 310 is received in the limiting groove 3236, thereby enabling the battery holder 310 to be better fixedly connected with the rotatable bracket 323.

As illustrated in FIG. 1 to FIG. 6, the present disclosure further provides an electric vehicle (not illustrated), which includes the vehicle frame assembly 10 described in any one of the above embodiments. Further, the vehicle frame assembly 10 includes the battery 100, the vehicle frame 200 and the battery mounting frame 300. The vehicle frame 200 is provided with the mounting portion 201, and the battery mounting frame 300 is fixedly mounted to the mounting portion 201. The battery mounting frame 300 includes the battery holder 310 and the easy loading and unloading structure 320, and the battery holder 310 is mounted on the easy loading and unloading structure 320. The easy loading and unloading structure 320 includes the fixing bracket 321, the rotatable bracket 323, the elastic positioning post 325, and the auxiliary limiting member 327. The fixing bracket 321 is configured to be connected to the vehicle frame 200. Specifically, the fixing bracket 321 is connected to the mounting portion 201. The fixing bracket 321 is provided with the first positioning hole 3211 and the second positioning hole 3213. The rotatable bracket 323 is rotatably connected to the fixing bracket 321, and the rotatable bracket 323 is provided with the rotation sliding groove 3232. In the embodiments, the battery holder 310 is mounted on the rotatable bracket 323, and the battery holder 310 is detachably sleeved on the battery 100, so that the battery 100 is connected to the rotatable bracket 323 through the battery holder 310. Since the battery 100 can be unloaded from and loaded onto the battery holder 310, the use convenience of the battery mounting frame 300 is improved.

In some embodiments, the elastic positioning post 325 is connected to the side of the rotatable bracket 323 facing the fixing bracket 321, and the elastic positioning post 325 is arranged to elastically engage with and abut against the first positioning hole 3211 or the second positioning hole 3213. When the elastic positioning post 325 is elastically engaged with and abuts against the first positioning hole 3211, the rotatable bracket 323 is rotated to a first predetermined position relative to the fixing bracket 321; in this case, it is rotated to be in the open state, that is, the rotatable bracket 323 is at a predetermined angle relative to the fixing bracket 321, and the battery 100 may be unloaded and loaded, especially for a vehicle frame 200 having a narrow space. When the elastic positioning post 325 is elastically engaged with and abuts against the second positioning hole 3213, the rotatable bracket 323 is rotated to a second predetermined position relative to the fixing bracket 321; in this case, it is in the closed state in which the rotatable bracket 323 is substantially parallel to the fixing bracket 321, and the battery 100 is reliably received on the vehicle frame 200 with the easy loading and unloading structure 320.

In some embodiments, the auxiliary limiting member 327 is connected to the fixing bracket 321. The auxiliary limiting member 327 extends into the rotation sliding groove 3232, and relative sliding happens between the auxiliary limiting member 327 and the rotation sliding groove 3232 when the rotatable bracket 323 is rotated. When the rotatable bracket 323 is rotated relative to the fixing bracket 321, the side of the rotatable bracket 323 away from the fixing bracket 321 is configured to be restrained by the auxiliary limiting member 327, so that the rotatable bracket 323 is prevented, during the process that the rotatable bracket 323 is rotated relative to the fixing bracket 321, from shaking in a direction perpendicular to a plane where the rotatable bracket 323 is rotated. In addition, the relative sliding between the auxiliary limiting member 327 and the rotation sliding groove 3232 that exists when the rotatable bracket 323 is rotated relative to the fixing bracket 321, improves the smoothness and reliability of the rotation of the rotatable bracket 323 relative to the fixing bracket 321.

In the electric vehicle mentioned above, the battery holder 310 may be mounted on the rotatable bracket 323, and the fixing bracket 321 may be fixed on the vehicle frame 200. Since the rotatable bracket 323 is rotatably connected to the fixing bracket 321, the rotatable bracket 323 can be rotated to a predetermined angle relative to the fixing bracket 321; as such, when there is a need to unload and load the battery 100, the user can quickly unload the battery 100 from the battery holder 310 or load the battery 100 onto the battery holder 310. Thus, the battery 100 is enabled to be quickly unloaded and loaded, especially for a vehicle frame 200 having a relatively narrow space. In the easy loading and unloading structure 320, during the process that the rotatable bracket 323 is rotated relative to the fixing bracket 321, the elastic positioning post 325 is arranged to elastically engage with and abut against the first positioning hole 3211 or the second positioning hole 3213, so that the rotatable bracket 323 can be correspondingly positioned at two different positions relative to the fixing bracket 321, thereby satisfying a positioning requirement for unloading and loading as well as holding the battery 100. Through the rotation of the rotatable bracket 323 relative to the fixing bracket 321, the elastic positioning post 325 is arranged to elastically engage with and abut against the first positioning hole 3211 or the second positioning hole 3213, so that the elastic positioning post 325 can play a limiting and supporting role at positions where the rotatable bracket 323 is rotated to relative to the fixing bracket 321. In addition, the auxiliary limiting member 327 is connected to the fixing bracket 321 and extends into the rotation sliding groove 3232, and when the rotatable bracket 323 is rotated relative to the fixing bracket 321, the side of the rotatable bracket 323 away from the fixing bracket 321 is configured to be restrained by the auxiliary limiting member 327; as such, it avoids the rotatable bracket 323 from shaking towards a side away from the fixing bracket 321 during the process that the rotatable bracket 323 is rotated relative to the fixing bracket 321. This avoids the shaking caused during the rotation of the rotatable base relative to the fixing base in the existing battery mounting frame 300, that is, this avoids the rotatable bracket 323 from shaking up and down relative to the fixing bracket 321 during the process that the rotatable bracket 323 is rotated relative to the fixing bracket 321. Thus, the reliability of the rotation of the rotatable base relative to the fixing base is improved, and the service reliability of the easy loading and unloading structure 320 is improved.

Different from the related art, the present disclosure brings about at least advantages as follows.
1. In the easy loading and unloading structure 320 mentioned above, the battery holder 310 may be mounted on the rotatable bracket 323, and the fixing bracket 321 may be fixed onto the vehicle frame 200. Since the rotatable bracket 323 is rotatably connected to the fixing bracket 321, the rotatable bracket 323 can be rotated to a predetermined angle relative to the fixing bracket 321; as such, when there is a need to unload and load the battery 100, the user can quickly unload the battery 100 from the battery holder 310 or load the battery 100 into the battery holder 310. Thus, the battery 100 is enabled to be quickly unloaded and loaded, especially for a vehicle frame 200 having a relatively narrow space.
2. In the easy loading and unloading structure 320 mentioned above, during the process that the rotatable bracket 323 is rotated relative to the fixing bracket 321, the elastic positioning post 325 is arranged to elastically engage with and engage against the first positioning hole 3211 or the second positioning hole 3213, so that the rotatable bracket 323 can be correspondingly positioned at two different positions relative to the fixing bracket 321, thereby satisfying a positioning requirement for unloading and loading as well as holding the battery 100. For example, when the elastic positioning post 325 is elastically engaged with and abuts against the first positioning hole 3211, the rotatable bracket 323 is rotated to a first predetermined position relative to the fixing bracket 321, in this case, the battery 100 can be unloaded and loaded. When the elastic positioning post 325 is elastically engaged with and abuts against the second positioning hole 3213, the rotatable bracket 323 is rotated to a second predetermined position relative to the fixing bracket 321, in this case, the battery 100 is reliably received on the vehicle frame 200 with the easy loading and unloading structure 320.
3. When the rotatable bracket 323 is rotated relative to the fixing bracket 321, the elastic positioning post 325 is arranged to elastically engage with and engaging against the first positioning hole 3211 or the second positioning hole 3213, so that the elastic positioning post 325 can play a limiting and supporting role at positions where the rotatable bracket 323 is rotated to relative to the fixing bracket 321. In addition, the auxiliary limiting member 327 is connected to the fixing bracket 321 and extends into the rotation sliding groove 3232; and when the rotatable bracket 323 is rotated relative to the fixing bracket 321, wherein the side of the rotatable bracket 323 away from the fixing bracket 321 is configured to be restrained by the auxiliary limiting member 327; as such, it avoids the rotatable bracket 323 from shaking towards a side away from the fixing bracket 321 during the process that the rotatable bracket 323 is rotated relative to the fixing bracket 321. This avoids the shaking caused during the rotation of the rotatable base relative to the fixing base in the existing battery mounting frame 300, improves the reliability of the rotation of the rotatable base relative to the fixing base, and improves the service reliability of the easy loading and unloading structure 320.

The foregoing embodiments only illustrate several implementations of the present disclosure, and their descriptions are relatively specific and detailed, but they cannot be construed as limiting the scope of the present disclosure. The protection scope of the present invention is defined by the claims.

## Claims

1. A loading and unloading structure (320), comprising:
a fixing bracket (321), provided with a first positioning hole (3211) and a second positioning hole (3213);
a rotatable bracket (323) rotatably connected to the fixing bracket (321), wherein a rotation sliding groove (3232) is provided in the rotatable bracket (323);
an elastic positioning post (325) connected to a side of the rotatable bracket (323) facing the fixing bracket (321), wherein the elastic positioning post (325) is arranged to elastically engage with and abut against the first positioning hole (3211) or the second positioning hole (3213); and
an auxiliary limiting member (327) connected to the fixing bracket (321), wherein the auxiliary limiting member (327) extends into the rotation sliding groove (3232), and a side of the rotatable bracket (323) away from the fixing bracket (321) is configured to be restrained by the auxiliary limiting member (327) when the rotatable bracket (323) is rotated relative to the fixing bracket (321); wherein the auxiliary limiting member (327) comprises a rotation guiding post (3272) and a mounting member (3274), the rotation guiding post (3272) protrudes from a side of the fixing bracket (321) close to the rotatable bracket (323) and extends into the rotation sliding groove (3232), and there is relative sliding between the rotation guiding post (3272) and the rotation sliding groove (3232) when the rotatable bracket (323) is rotated; **characterised in that** the mounting member (3274) is connected to the rotation guiding post (3272), and wherein the side of the rotatable bracket (323) away from the fixing bracket (321) is configured to be restrained by the mounting member (3274) when the rotatable bracket (323) is rotated relative to the fixing bracket (321); the mounting member (3274) is detachably connected to the rotation guiding post (3272).

2. The loading and unloading structure (320) of claim 1, wherein there are two auxiliary limiting members (327) and two rotation sliding grooves (3232), and each of the two auxiliary limiting members (327) is arranged in a corresponding one of the two rotation sliding grooves (3232).

3. The loading and unloading structure (320) any one of claims 1 and 2, wherein the loading and unloading structure (320) further comprises a locking member (326), the fixing bracket (321) is provided with a first connecting hole (306), the rotatable bracket (323) is provided with a second connecting hole (308) located between the two rotation sliding grooves (3232), the second connecting hole (308) is aligned and communicated with the first connecting hole (306), and the locking member (326) passes through both the first connecting hole (306) and the second connecting hole (308) in such a manner that the rotatable bracket (323) is rotatably connected with the fixing bracket (321).

4. The loading and unloading structure (320) of claim 1, wherein the rotation guiding post (3272) is provided with a fixing hole, and the mounting member (3274) is located in the fixing hole and in thread connection with the rotation guiding post (3272).

5. The loading and unloading structure (320) of any one of claims 1 to 4, wherein a diameter of an end of the mounting member (3274) away from the fixing bracket (321) is greater than a width of the rotation sliding groove (3232).

6. The loading and unloading structure (320) of claim 3, wherein there is a preloading deformation gap (321a) between the fixing bracket (321) and the rotatable bracket (323).

7. The loading and unloading structure (320) of claim 6, wherein a side of the fixing bracket (321) close to the rotatable bracket (323) is provided with a first supporting protrusion (321b) and a second supporting protrusion (321c), the first supporting protrusion (321b) is arranged around the first connecting hole (306), and the second supporting protrusion (321c) is arranged around both the first positioning hole (3211) and the second positioning hole (3213); the preloading deformation gap (321a) is defined between the fixing bracket (321), the rotatable bracket (323), the first supporting protrusion (321b) and the second supporting protrusion (321c); and when the rotatable bracket (323) is rotatably connected to the fixing bracket (321), the rotatable bracket (323) is arranged to deform toward the preloading deformation gap (321a).

8. A battery mounting frame (300), comprising a battery holder (310) and the loading and unloading structure (320) of any one of claims 1 to 7, wherein the battery holder (310) is mounted on the rotatable bracket (323), the battery holder (310) is configured to be detachably sleeved on a battery (100), and the fixing bracket (321) is configured to be connected onto a vehicle frame (200).

9. A vehicle frame assembly (10), comprising a battery (100), a vehicle frame (200) and the battery (100) mounting frame of claim 8, wherein the vehicle frame (200) is provided with a mounting portion (201), the fixing bracket (321) is connected onto the mounting portion (201), and the battery holder (310) is detachably sleeved on the battery (100).

10. An electric vehicle, comprising the vehicle frame assembly (10) of claim 9.

## Patentansprüche

1. Belade- und Entladestruktur (320), umfassend:
- einen Befestigungsbügel (321) mit einem ersten Positionierloch (3211) und einem zweiten Positionierloch (3213);
- einen Drehbügel (323), der drehbar mit dem Befestigungsbügel (321) verbunden ist, wobei in dem Drehbügel (323) eine Drehgleitnut (3232) vorgesehen ist;
- einen elastischen Positionierstift (325), der an einer dem Befestigungsbügel (321) zugewandten Seite des Drehbügels (323) befestigt ist, wobei der elastische Positionierstift (325) dazu eingerichtet ist, elastisch in das erste Positionierloch (3211) oder das zweite Positionierloch (3213) einzugreifen und daran anzuliegen; und
- ein Hilfsbegrenzungselement (327), das mit dem Befestigungsbügel (321) verbunden ist, wobei sich das Hilfsbegrenzungselement (327) in die Drehgleitnut (3232) erstreckt und wobei eine vom Befestigungsbügel (321) abgewandte Seite des Drehbügels (323) so ausgebildet ist, dass sie beim Drehen des Drehbügels (323) relativ zum Befestigungsbügel (321) durch das Hilfsbegrenzungselement (327) begrenzt wird; wobei das Hilfsbegrenzungselement (327) einen Drehführungsstift (3272) und ein Montageelement (3274) umfasst, wobei der Drehführungsstift (3272) von einer dem Drehbügel (323) zugewandten Seite des Befestigungsbügels (321) hervorsteht und sich in die Drehgleitnut (3232) erstreckt, und wobei beim Drehen des Drehbügels (323) ein relatives Gleiten zwischen dem Drehführungsstift (3272) und der Drehgleitnut (3232) erfolgt;
**dadurch gekennzeichnet, dass** das Montageelement (3274) mit dem Drehführungsstift (3272) verbunden ist und die vom Befestigungsbügel (321) abgewandte Seite des Drehbügels (323) beim Drehen des Drehbügels (323) relativ zum Befestigungsbügel (321) durch das Montageelement (3274) begrenzt wird, wobei das Montageelement (3274) lösbar mit dem Drehführungsstift (3272) verbunden ist.

2. Belade- und Entladestruktur (320) nach Anspruch 1, wobei zwei Hilfsbegrenzungselemente (327) und zwei Drehgleitnuten (3232) vorgesehen sind und jedes der zwei Hilfsbegrenzungselemente (327) in einer entsprechenden Drehgleitnut (3232) angeordnet ist.

3. Belade- und Entladestruktur (320) nach einem der Ansprüche 1 oder 2, wobei die Belade- und Entladestruktur (320) ferner ein Verriegelungselement (326) umfasst, wobei der Befestigungsbügel (321) mit einem ersten Verbindungsloch (306) versehen ist, wobei der Drehbügel (323) mit einem zweiten Verbindungsloch (308) versehen ist, das zwischen den zwei Drehgleitnuten (3232) angeordnet ist, wobei das zweite Verbindungsloch (308) mit dem ersten Verbindungsloch (306) fluchtet und mit diesem in Durchgangsverbindung steht, und wobei das Verriegelungselement (326) sowohl das erste Verbindungsloch (306) als auch das zweite Verbindungsloch (308) durchsetzt, derart, dass der Drehbügel (323) drehbar mit dem Befestigungsbügel (321) verbunden ist.

4. Belade- und Entladestruktur (320) nach Anspruch 1, wobei der Drehführungsstift (3272) mit einem Befestigungsloch versehen ist und das Montageelement (3274) in dem Befestigungsloch angeordnet ist sowie in Gewindeeingriff mit dem Drehführungsstift (3272) steht.

5. Belade- und Entladestruktur (320) nach einem der Ansprüche 1 bis 4, wobei ein Durchmesser eines vom Befestigungsbügel (321) abgewandten Endes des Montageelements (3274) größer als eine Breite der Drehgleitnut (3232) ist.

6. Belade- und Entladestruktur (320) nach Anspruch 3, wobei ein Vorspannungs-Verformungsspalt (321a) zwischen dem Befestigungsbügel (321) und dem Drehbügel (323) vorgesehen ist.

7. Belade- und Entladestruktur (320) nach Anspruch 6, wobei eine dem Drehbügel (323) zugewandte Seite des Befestigungsbügels (321) mit einem ersten Stützvorsprung (321b) und einem zweiten Stützvorsprung (321c) versehen ist, wobei der erste Stützvorsprung (321b) um das erste Verbindungsloch (306) herum angeordnet ist und der zweite Stützvorsprung (321c) um das erste Positionierloch (3211) sowie um das zweite Positionierloch (3213) herum angeordnet ist, wobei der Vorspannungs-Verformungsspalt (321a) zwischen dem Befestigungsbügel (321), dem Drehbügel (323), dem ersten Stützvorsprung (321b) und dem zweiten Stützvorsprung (321c) definiert ist, und wobei der Drehbügel (323) im drehbar verbundenen Zustand dazu eingerichtet ist, sich in Richtung des Vorspannungs-Verformungsspalts (321a) zu verformen.

8. Batteriemontagerahmen (300), umfassend einen Batteriehalter (310) und die Belade- und Entladestruktur (320) nach einem der Ansprüche 1 bis 7, wobei der Batteriehalter (310) am Drehbügel (323) montiert ist, wobei der Batteriehalter (310) dazu eingerichtet ist, lösbar auf eine Batterie (100) aufgeschoben zu werden, und wobei der Befestigungsbügel (321) dazu eingerichtet ist, mit einem Fahrzeugrahmen (200) verbunden zu werden.

9. Fahrzeugrahmenanordnung (10), umfassend eine Batterie (100), einen Fahrzeugrahmen (200) und den Batteriemontagerahmen (300) nach Anspruch 8, wobei der Fahrzeugrahmen (200) mit einem Montageabschnitt (201) versehen ist, wobei der Befestigungsbügel (321) mit dem Montageabschnitt (201) verbunden ist, und wobei der Batteriehalter (310) lösbar auf die Batterie (100) aufgeschoben ist.

10. Elektrofahrzeug, umfassend die Fahrzeugrahmenanordnung (10) nach Anspruch 9.

## Revendications

1. Structure de chargement et de déchargement (320), comprenant:
un support de fixation (321) pourvu d'un premier trou de positionnement (3211) et d'un second trou de positionnement (3213) ;
un support rotatif (323) relié de manière rotative au support de fixation (321), dans lequel une rainure de glissement en rotation (3232) est formée dans le support rotatif (323);
un plot de positionnement élastique (325) relié à un côté du support rotatif (323) faisant face au support de fixation (321), dans lequel le plot de positionnement élastique (325) étant conçu pour s'engager de manière élastique et venir en butée contre le premier trou de positionnement (3211) ou le second trou de positionnement (3213) ; et
un élément de limitation auxiliaire (327) relié au support de fixation (321), dans lequel l'élément de limitation auxiliaire (327) s'étend dans la rainure de glissement en rotation (3232), et un côté du support rotatif (323) éloigné du support de fixation (321) est configuré pour être retenu par l'élément de limitation auxiliaire (327) lorsque le support rotatif (323) tourne par rapport au support de fixation (321) ; dans lequel l'élément de limitation auxiliaire (327) comprend un plot de guidage en rotation (3272) et un élément de montage (3274), le plot de guidage en rotation (3272) faisant saillie d'un côté du support de fixation (321) proche du support rotatif (323) et s'étendant dans la rainure de glissement en rotation (3232), et un glissement relatif se produisant entre le plot de guidage en rotation (3272) et la rainure de glissement en rotation (3232) lorsque le support rotatif (323) tourne ;
**caractérisée en ce que** l'élément de montage (3274) est relié au plot de guidage en rotation (3272), et le côté du support rotatif (323) éloigné du support de fixation (321) est configuré pour être retenu par l'élément de montage (3274) lorsque le support rotatif (323) tourne par rapport au support de fixation (321) ; l'élément de montage (3274) est relié de manière détachable au plot de guidage en rotation (3272).

2. Structure de chargement et de déchargement (320) selon la revendication 1, dans laquelle les éléments de limitation auxiliaires (327) et les rainures de glissement en rotation (3232) sont tous au nombre de deux, et chacun des deux éléments de limitation auxiliaires (327) est disposé dans l'une des deux rainures de glissement en rotation (3232) correspondantes.

3. Structure de chargement et de déchargement (320) selon l'une quelconque des revendications 1 et 2, dans laquelle la structure de chargement et de déchargement (320) comprend en outre un élément de verrouillage (326), le support de fixation (321) est pourvu d'un premier trou de liaison (306), le support rotatif (323) est pourvu d'un second trou de liaison (308) situé entre les deux rainures de glissement en rotation (3232), le second trou de liaison (308) est aligné et communique avec le premier trou de liaison (306), et l'élément de verrouillage (326) traverse à la fois le premier trou de liaison (306) et le second trou de liaison (308), de sorte que le support rotatif (323) soit relié de manière rotative au support de fixation (321).

4. Structure de chargement et de déchargement (320) selon la revendication 1, dans laquelle le plot de guidage en rotation (3272) est pourvu d'un trou de fixation, et l'élément de montage (3274) est disposé dans le trou de fixation et relié par filetage au plot de guidage en rotation (3272).

5. Structure de chargement et de déchargement (320) selon l'une quelconque des revendications 1 à 4, dans laquelle le diamètre d'une extrémité de l'élément de montage (3274) opposée au support de fixation (321) est supérieur à la largeur de la rainure de glissement en rotation (3232).

6. Structure de chargement et de déchargement (320) selon la revendication 3, dans laquelle un espace de déformation de précharge (321a) est prévu entre le support de fixation (321) et le support rotatif (323).

7. Structure de chargement et de déchargement (320) selon la revendication 6, dans laquelle un côté du support de fixation (321) proche du support rotatif (323) est pourvu d'une première saillie de support (321b) et d'une seconde saillie de support (321c), la première saillie de support (321b) étant disposée autour du premier trou de liaison (306), et la seconde saillie de support (321c) étant disposée autour du premier trou de positionnement (3211) et du second trou de positionnement (3213) ; l'espace de déformation de précharge (321a) est défini entre le support de fixation (321), le support rotatif (323), la première saillie de support (321b) et la seconde saillie de support (321c) ; et lorsque le support rotatif (323) est relié de manière rotative au support de fixation (321), le support rotatif (323) est configuré pour se déformer vers l'espace de déformation de précharge (321a).

8. Cadre de montage de batterie (300) comprenant un support de batterie (310) et la structure de chargement et de déchargement (320) selon l'une quelconque des revendications 1 à 7, dans lequel le support de batterie (310) est monté sur le support rotatif (323) et est configuré pour être emmanché de manière détachable sur une batterie (100), et le support de fixation (321) est configuré pour être relié à un cadre de véhicule (200).

9. Ensemble cadre de véhicule (10) comprenant une batterie (100), un cadre de véhicule (200) et le cadre de montage de batterie (300) selon la revendication 8, dans lequel le cadre de véhicule (200) est pourvu d'une partie de montage (201), le support de fixation (321) est relié à la partie de montage (201), et le support de batterie (310) est emmanché de manière détachable sur la batterie (100).

10. Véhicule électrique comprenant l'ensemble cadre de véhicule (10) selon la revendication 9.
